(19) Europäisches Patentamt
European Patent Office
Office européen des brevets

(11) Veröffentlichungsnummer: **0 287 962 B1**

(12) **EUROPÄISCHE PATENTSCHRIFT**

(45) Veröffentlichungstag der Patentschrift: **01.07.92**

(51) Int. Cl.5: **C04B 18/24**

(21) Anmeldenummer: **88106012.3**

(22) Anmeldetag: **15.04.88**

(54) **Faserbewehrter Formkörper und Verfahren zu seiner Herstellung.**

(30) Priorität: **21.04.87 CH 1535/87**

(43) Veröffentlichungstag der Anmeldung:
**26.10.88 Patentblatt 88/43**

(45) Bekanntmachung des Hinweises auf die Patenterteilung:
**01.07.92 Patentblatt 92/27**

(84) Benannte Vertragsstaaten:
**AT BE DE ES FR GB GR IT NL**

(56) Entgegenhaltungen:
**DE-C- 878 919**
**DE-C- 2 463 044**
**FR-A- 619 938**
**GB-A- 2 137 977**

**HOLZ ALS ROH- UND WERKSTOFF, Band 45, April 1987, Seiten 131-136, Springer-Verlag, Berlin, DE; M.H. SIMATUPANG et al.: "Einfluss der Lagerung von Pappel, Birke, Eiche und Lärche sowie des Zusatzes von SiO2-Feinstaub auf die Biegefestigkeit zementgebundener Spanplatten"**

(73) Patentinhaber: **REDCO SA**
**Kuiermanstraat 1**
**B-2920 Kapelle-op-den-Bos(BE)**

(84) Benannte Vertragsstaaten:
**BE DE ES GB GR NL**

(73) Patentinhaber: **S.A. Financière Eternit**
**33, rue d'Artois**
**F-75008 Paris(FR)**

(84) Benannte Vertragsstaaten:
**FR IT**

(73) Patentinhaber: **Eternit-Werke Ludwig Hatschek AG**

**A-4840 Vöcklabruck(AT)**

(84) Benannte Vertragsstaaten:
**AT**

(72) Erfinder: **Studinka, Joseph**
**Dolderstrasse 92**
**CH-8032 Zürich(CH)**
Erfinder: **Meier, Peter**
**Pfannenstielstrasse 18**
**CH-8820 Wädenswil(CH)**

(74) Vertreter: **Scheidegger, Werner & Co.**
**Siewerdtstrasse 95**
**CH-8050 Zürich(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen Formkörper aus hydraulischem Bindemittel und Fasern sowie gegebenenfalls Füllstoffen, Pigmenten und weiteren Zusätzen.

Der Ersatz von Asbestzementprodukten durch gleichartige, aber asbestfaserfreie Bauteile im Bauwesen hat in den letzten Jahren zunehmende Bedeutung erhalten. Zum einen tritt besonders bei unsachgemässer Erzeugung und Verarbeitung von Asbestzement gesundheitsgefährlicher Staub auf, zum anderen zwingt die Abnahme verfügbarer natürlicher Asbestvorkommen zur Suche nach alternativen Werkstoffen, die sich in den bisherigen Anwendungsbereichen von Asbestzement problemlos einsetzen lassen.

Für diesen Zweck ist bereits vorgeschlagen worden, Asbest durch andere natürliche und synthetische Fasern oder damit hergestellte Mischungen bei der Herstellung faserverstärkter anorganischer, hydraulisch abgebundener Formkörper zu ersetzen.

Auch ist bekannt, anstelle von Asbest Zellstofffasern, allein oder auch Mischungen von Zellstofffasern mit synthetischen organischen Fasern, als Bewehrungsmaterial für Beton- oder Zementerzeugnisse zu verwenden.

Derartige bekannte Werkstoffe haben jedoch -besonders gegenüber Asbestzement - immer noch fertigungs- und anwendungstechnische Nachteile und Mängel. Sie lassen sich nur mit grossem Aufwand, besonders im Zuge der Aufbereitung der Rohstoffe bzw. Rohstoffmischungen, herstellen und haben relativ niedrige Biegezug- und Schlagfestigkeit, so dass sie den anwendungstechnischen Anforderungen zum Beispiel aufgrund von Baunormen nicht genügen.

Neuere Vorschläge sehen die Verwendung von Hanffasern (DE-C-24 63 044) und Eucalyptusfasern (DE-C-29 40 623) als Verstärkungsfasern für Zement vor. Gegenüber Asbestzement haben diese Werkstoffe jedoch deutlich geringere Festigkeiten, insbesondere bei nicht gepressten Produkten. Ein ausgerprochener Nachteil dieser Faserzemente ist ihre sehr geringe Schlagzähigkeit, resp. Bruchwiderstand. Zudem lassen sich aus solchen Mischungen wegen ihrer völlig ungenügenden Formbarkeit, resp. Plastizität keine profilierten Produkte, wie z.B. Wellplatten herstellen. Ferner ist gemäss der erwähnten Patentschriften die Verwendung gebleichter Zellstoffasern, unbedingt notwendig, was neben höheren Rohstoffkosten auch den Nachteil verminderter Langzeitbeständigkeit hat. Auch sind die dort vorgeschlagenen Zellstoffarten, wie Eucalyptuszellstoff bzw. -fasern, nur begrenzt und nicht als heimische Rohstoffe verfügbar.

Daher gibt der bisher bekannte Stand der Technik keine zufriedenstellende Lösung für die Herstellung faserbewehrter asbestfreier anorganischer Werkstoffe, die anstelle von Asbestzement bei guten Materialeigenschaften angewendet und ebenso wirtschaftlich erzeugt werden können.

Diese Aufgabe wird beim erfindungsgemässen faserbewehrten Formkörper dadurch gelöst, dass als Bewehrungsfasern gebleichte und/oder ungebleichte Birkenzellstofffasern, allein oder zusammen mit anderen Faserstoffen, eingesetzt sind.

Dank der Erfindung wird die wirtschaftliche Herstellung eines faserbewehrten anorganischen Bindemittelwerkstoffes ohne die obengenannten Nachteile ermöglicht.

Der erfindungsgemässe Formkörper zeichnet sich durch hohe Biegezug- und Schlagfestigkeit bzw. durch einen hohen Bruchwiderstand aus, so dass er in hervorragender Weise anstelle von Asbestzementerzeugnissen als Bauteil verwendet werden kann.

Für den Fachmann ist nun überraschend, dass gebleichter, besonders aber ungebleichter Birkenzellstoff als faserförmige Verstärkung für aus hydraulischem Bindemittel hergestellte Werkstoffe so hervorragend geeignet ist. Hervorgehoben werden muss dabei die Tatsache, dass die erfindungsgemässe Verwendung von Birkenzellstoff zu einer unerwartet guten Kombination von herstellungstechnischen und Gebrauchseigenschaften führt. Im Gegensatz zu Eukalyptus-Zellstoff erlaubt das gute Entwässerungsververhalten und die gute Formbarkeit der mit Birkenzellstoff hergestellten Mischungen die Fertigung von gepressten oder ungepressten Wellplatten, welche sich neben der erforderlichen hohen Biegefestigkeit auch durch einen hohen Bruchwiderstand, Schlagzähigkeit und Frostbeständigkeit auszeichnen.

Besser als mit anderen in diesem Zusammenhang bekannten Faserarten können mit Birkenzellstoff auch dampfgehärtete Erzeugnisse, die Quarzmehl mit Kalkhydrat als Bindemittel enthalten, hergestellt werden, die besonders als Wellplatten, aber auch in Bereichen hoher Brandschutzanforderungen im Bauwesen, so zum Beispiel für die Verkleidung von Stahlträgern oder für die feuerfeste Auskleidung von Be- und Entlüftungsleitungen, verwendet werden können.

Die erfindungsgemässen Formkörper werden mit gebleichtem oder ungebleichten Birkenzellstoff, allein oder mit anderen natürlichen und/oder synthetischen Fasern gemischt, hergestellt, wobei sich vor allem auch eine Mischung aus Birkenzellstoff und Cellulose- bzw. Zellstoff-Hartfasern, wie Palm-, Flachs-, Abaca-, Fichten-, Kiefer-, und/oder Sisalfasern, bewährt.

Aus der Vielzahl möglicher Ausführungsvarianten der Erfindung werden nachstehend einige Beispiele gegeben.

**Beispiel 1**

In einem Stofflöser werden ca. 2500 Gewichtsteile (GT) Wasser vorgelegt und 90 GT ungebleichter (16 Grad SR) in Blattform hinzugegeben. Nach einer Aufschlussdauer von ca. 30 Minuten bei ca. 800 U/min wird die Stoffsuspension entstippt und in einer Mischvorrichtung mit 1000 GT Portlandzement vermischt.

Die wässerige Faser-Zement-Suspension wird einer Mischbütte und von dort - gegebenenfalls unter Zusatz von Polyelektrolyten (0,001 bis 0,25 Gew.-% Polyacrylamid, bezogen auf den Zementeintrag) - einer Direktauflaufmaschine zugeführt, an der über Vlieslege- und Entwässerungsprozesse, analog dem Hatschek- oder Magnani-Verfahren, die Suspension zu einem rohr- oder plattenartigen Formkörper verarbeitet wird.

An den 28 Tage lang luftgestapelten Formkörpern werden die Biegezugfestigkeit und der Bruchwiderstand ermittelt.

(Biegezugfestigkeit und Bruchwiderstand, Messdaten in Tabelle 1 des Anhanges).

**Beispiel 2**

Birkenzellstoff wird wie oben in Wasser suspendiert.

Der entstippten Zellstoffsuspensionen werden 600 GT Portlandzement und 400 GT Quarzmehl (Feinheit ca. 5000 Blaine) hinzugemischt und die Mischung an einer Direktauflaufmaschine zu einem Plattenformkörper verarbeitet.

Der Formkörper wird 3 Tage luftgelagert, anschliessend bei 6 bar und 338 K über 16 Stunden autoklaviert und dessen Festigkeiten nach 3 Tagen weiterer Luftlagerung wie b. Beispiel 1 ermittelt.

(Biegezugfestigkeit und Bruchwiderstand, Messdaten in Tabelle 3 des Anhanges).

**Beispiel 3**

20 bis 80 Gewichtsteile Birkenzellstoff und 70 bis 10 Gewichtsteile Flachs- und/oder Sisalzellstoff werden wie oben im Stofflöser gelöst und - alternativ - wie nach Beispiel 1 mit Portlandzement als Bindemittel zu einem luftgehärteten Formkörper bzw. wie nach Beispiel 2 mit Portlandzement und Quarz als Bindemittel zu einem dampfgehärteten Formkörper verarbeitet.

Die Festigkeiten werden wie b. Beispiel 1 nach 28 Tagen bzw. 3 Tagen an den luftgetrockneten Formkörpern ermittelt.

(Biegezugfestigkeit und Bruchwiderstand, Messdaten in Tabelle 3 des Anhanges).

**Beispiel 4**

Eine Zellstoffsuspension entsprechend den oben gegebenen Beispielen wird in einer Mischvorrichtung mit ca. 800 Gewichtsteilen Portlandzement bzw. einer Mischung von Portlandzement/Quarz nach Beispiel 2 sowie bis zu 300 Gewichtsteilen Perlit und/oder Glimmer und/oder Vermiculit gemischt und in einer Direktauflaufmaschine zu einem Formkörper verarbeitet.

An dem - alternativ - 28 Tage luftgelagerten bzw. dampfgehärteten Formkörper werden wie b. Beispiel 1 die Biegezugfestigkeit und Bruchwiderstand ermittelt.

(Biegezugfestigkeit und Bruchwiderstand, Messdaten in Tabelle 4 des Anhanges).

**Beispiel 5**

Eine Zellstoffsuspension entsprechend den vorerwähnten Beispielen wird in einer Mischvorrichtung mit 550 Gewichtsteilen feinem Quarzmehl (Blaine >5000) sowie 300 bis 450 Gewichtsteilen Kalkhydrat gemischt und zu einem Plattenformkörper verarbeitet.

Der Formkörper wird bei einem Wasserdampfdruck von 16 bar ca. 8 Stunden lang oder bei einem Wasserdampfdruck von 8 bar ca. 20 Stunden lang autoklaviert und anschliessend 3 Tage luftgelagert.

Anschliessend werden wie bei den vorherigen Beispielen die Festigkeit ermittelt.

(Biegezugfestigkeit und Bruchwiderstand, Messdaten in Tabelle 5 des Anhanges).

**Beispiel 6**

Eine Zellstoff/Bindemittelsuspension nach Beispiel 1 bis 5 wird durch Zugabe von Wasser in einem Mischer auf einen Feststoffgehalt von 4 bis 10 Gew.-% eingestellt und nach dem bekannten Hatschek-Verfahren zu einem Platten-oder Rohr-Formkörper verarbeitet.

Gleichzeitig mit zu den erfindunggemässen Mischungen durchgeführten Betriebsversuchen wurden Formkörper aus vorbekannten Zellstoffbindemittel-Mischungen, so z.B. nach der in DE-C-29 40 623 gegebenen Lehre, hergestellt und diese in vergleichende Festigkeitsuntersuchungen mit einbezogen (Messdaten siehe Tabelle 6 des Anhanges).

Aus der Vielzahl von Versuchsreihen zu den obigen Beispielen, für die auszugsweise und beispielhaft Materialprüfungsergebnisse in der Tabelle 6a (siehe Anhang) angeführt sind, wird belegt, dass die erfindungsgemäss vorgeschlagene Verwendung von Birkenzellstoff und/oder Mischungen von Birkenzellstoff mit Cellulose- bzw. Zellstoffhartfasern, vor allem mit Sisalfasern, die Herstellung von asbestfreien Formkörpern mit hydraulischem Bindemittel und Fasern ermöglicht, deren Materialkennwerte und -eigenschaften denjenigen aus älteren bekannten Vorschlägen überlegen sind.

Hinzukommt der besondere wirtschaftliche Vorteil der Verwendung eines einheimischen bzw. europäischen und daher leicht und kostengünstig sowie auch künftig ausreichend verfügbaren Rohstoffes.

**Beispiel 7**

Die nachfolgend aufgeführten Mischungen wurden gemäss Beispiel 1-5 durch Zugabe von Wasser in einem Mischer auf einen Feststoffgehalt von 4 bis 10 Gew.-% eingestellt und auf einer Hatschekmaschine Wellplatten nach Profil 7 von 6 mm Dicke hergestellt. Die frisch hergestellten Platten wurden zwischen geölten Wellblechen während 3 Tagen zum Aushärten gelassen. Anschliessend wurden die Platten in einem Autoklaven während 16 Stunden bei 6 bar autoklaviert. Von der Mischung 1 wurden ungepresste und gepresste Varianten (30 Minuten 180 bar) hergestellt.

Von den Mischungen Nr. 1-4 der Tabelle 7 (siehe Anhang) zeigte sich, dass die Wellbarkeit der Mischungen Nr. 1 bis 3 voll befriedigte. Bei Mischung Nr. 4 entstanden zahlreiche Risse beim Wellvorgang. Besonders optimal zeigte sich das Wellverhalten bei den Mischungen Nr. 2 und 3, welche auch noch befriedigende Ergebnisse bei kleinen Wellradien zeigten.

Die Eigenschaften der so hergestellten Wellplatten sind in Tabelle 8 (siehe Anhang) zusammengestellt.

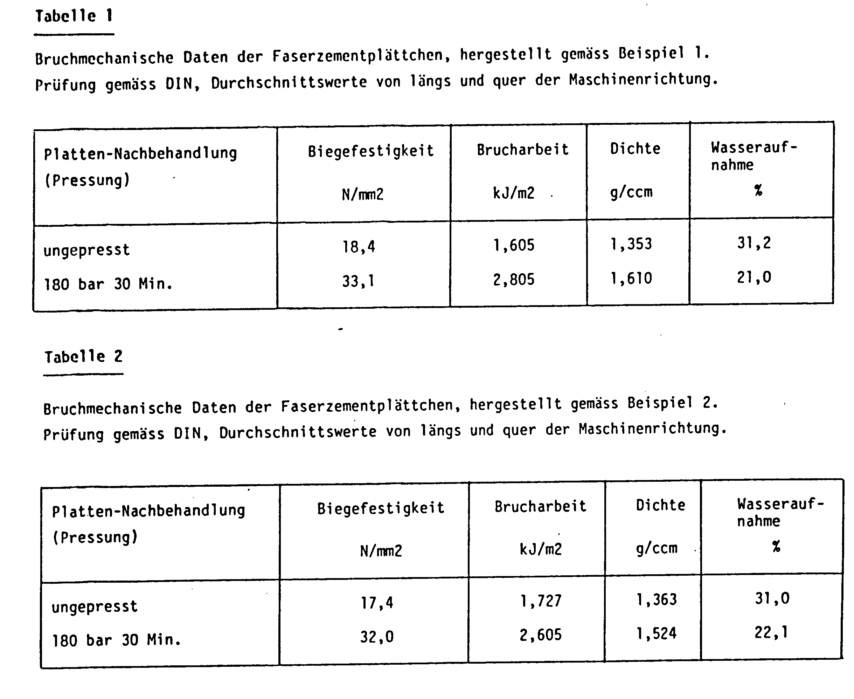

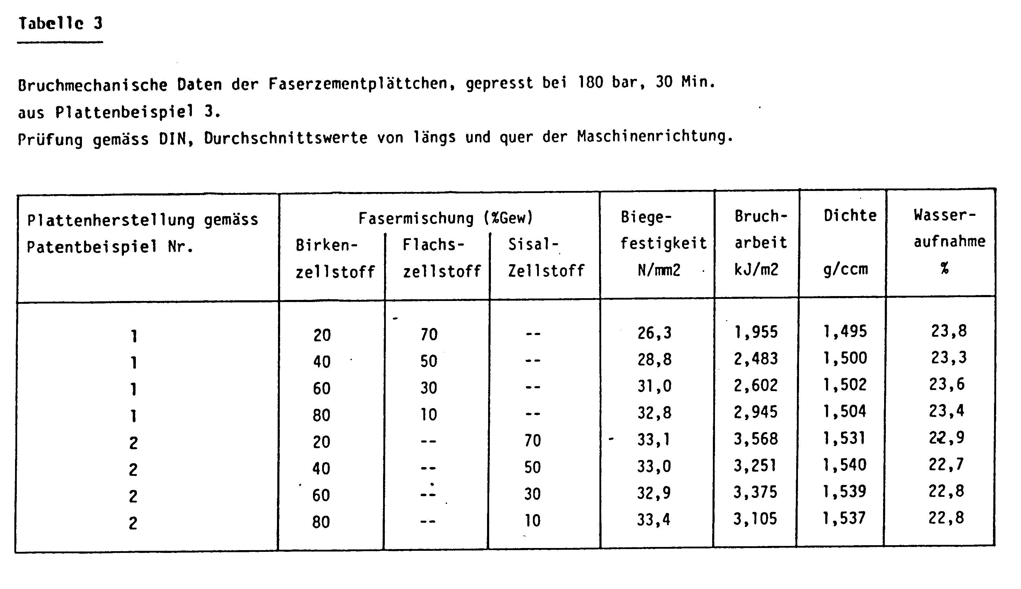

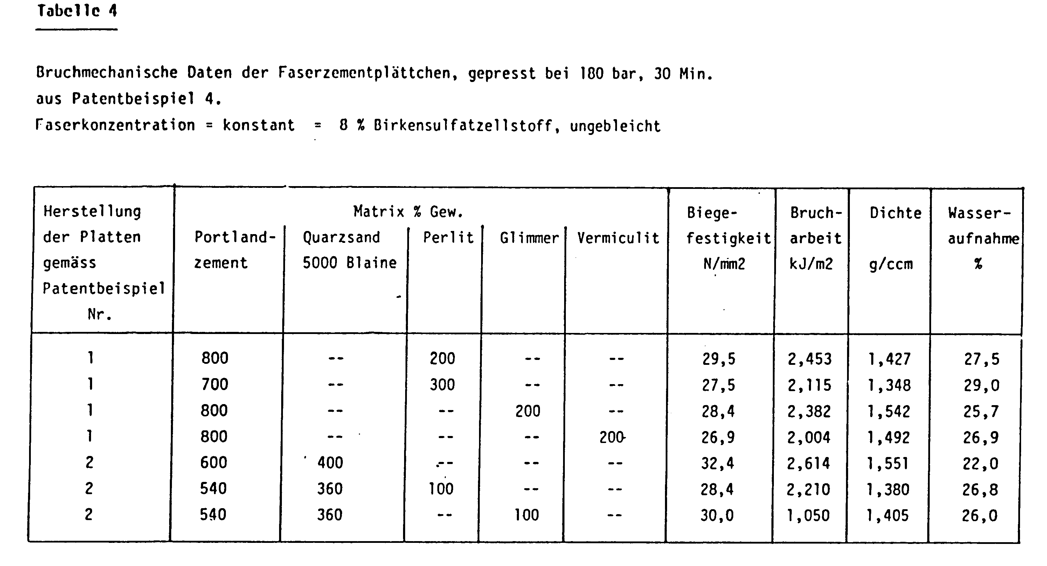

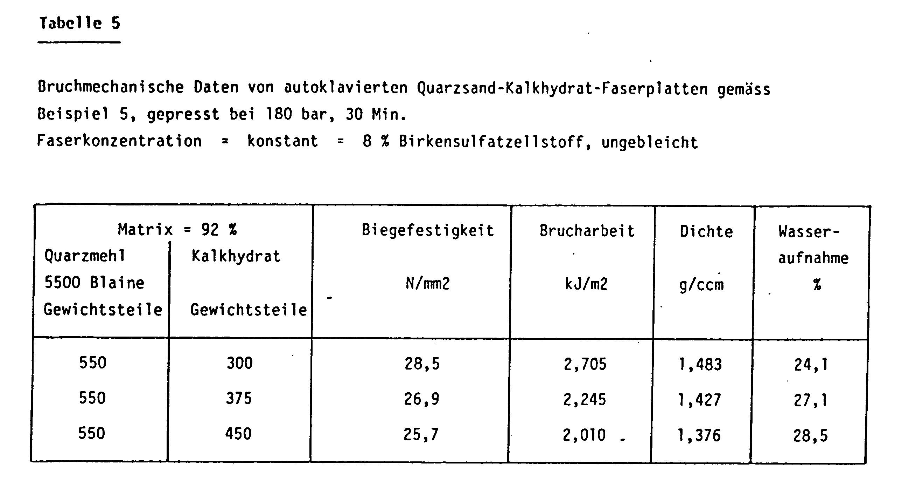

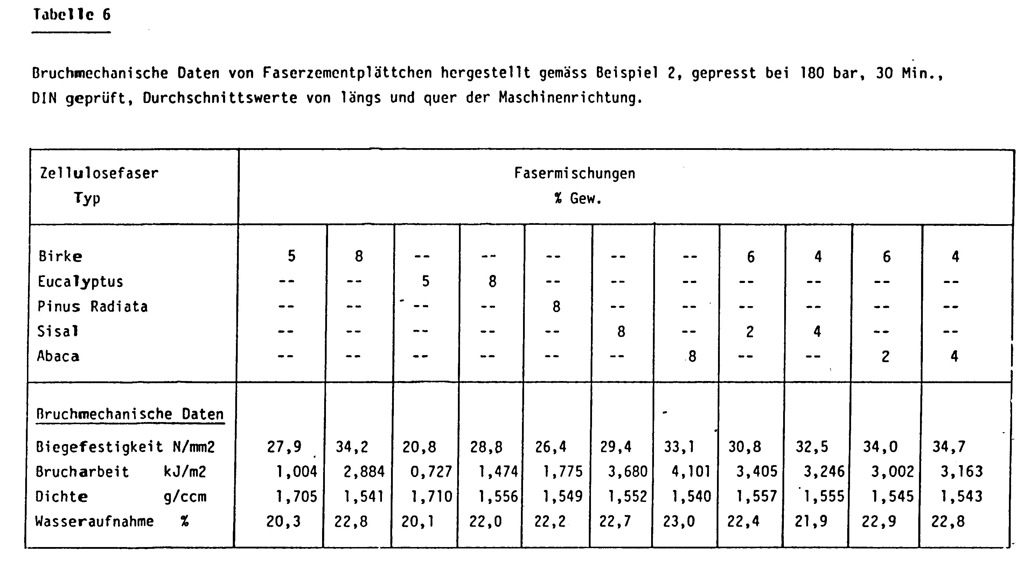

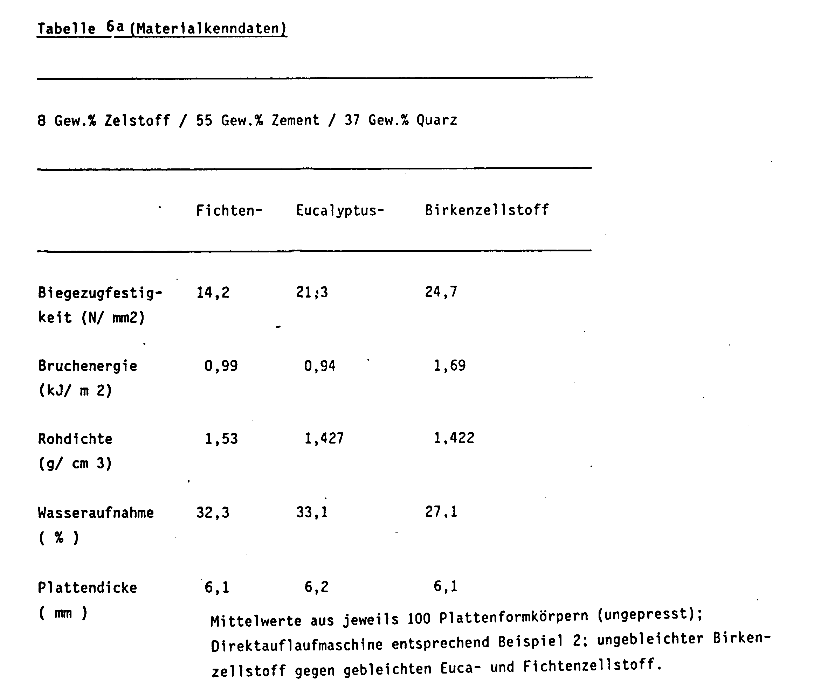

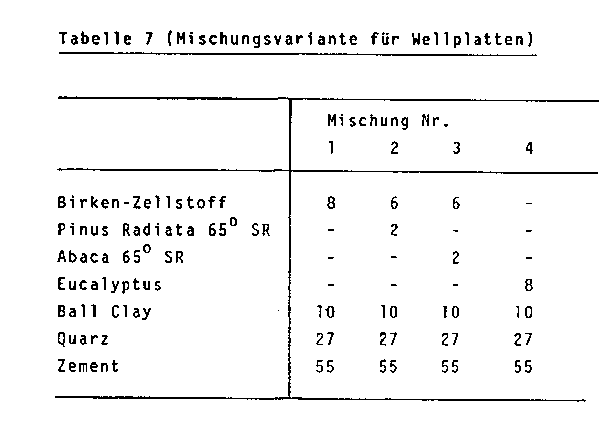

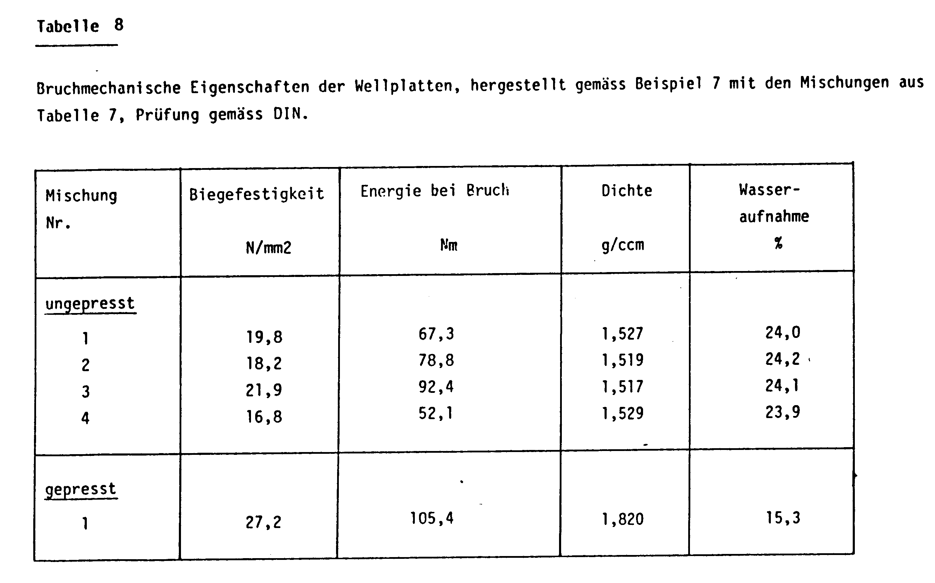

**Patentansprüche**

1. Als Bauteil verwendbarer Formkörper aus hydraulischem Bindemittel und natürlichen und/oder synthetischen anorganischen und/oder organischen Faserstoffen sowie gegebenenfalls Füllstoffen, dadurch gekennzeichnet, dass als Bewehrungsfasern gebleichte und/oder ungebleichte Birkenzellstoffasern, allein oder zusammen mit anderen Faserstoffen, eingesetzt sind.

2. Formkörper nach Anspruch 1, dadurch gekennzeichnet, dass der Anteil der Bewehrungsfasern 1 bis 15 Gewichtsprozent der Mischung aus Fasern, Bindemittel und gegebenenfalls Füll- und Färbemitteln sowie sonstigen Zusätzen beträgt.

3. Formkörper nach Anspruch 1 oder 2, dadurch gekennzeichnet, dass als hydraulisches Bindemittel Portlandzement und/oder Tonerdezement und/oder Hochofenzement und/oder Puzzolane eingesetzt ist.

4. Formkörper nach einem der Ansprüche 1 bis 3, dadurch gekennzeichnet, dass als hydraulisches Bindemittel Quarz sowie Kalkhydrat und/oder Zement eingesetzt ist.

5. Formkörper nach einem der Ansprüche 1 bis 4, dadurch gekennzeichnet, dass der Mischung Glimmer und/oder Vermiculite und/oder Perlite und/oder Bims und/oder Farbpigmente, sowie gegebenenfalls Bentonit, Spiolit, amorphe Kieselsäure, Kaolin, Wollastonit und Ball Clay hinzugesetzt sind.

6. Formkörper nach einem der Ansprüche 1 bis 5, dadurch gekennzeichnet, dass Polyelektrolyte, wie Polyacrylamide und/oder Alkylsulfonate und/oder Alkylcelluloseether, hinzugesetzt sind.

7. Verfahren zur Herstellung eines Formkörpers nach einem der Ansprüche 1 bis 6, dadurch gekennzeichnet, dass die Mischungskomponenten in beliebiger Reihenfolge oder auch die hieraus zunächst hergestellte Trockenmischung mit einem Wasserüberschuss vermischt und die wässerige Mischung unter gleichzeitiger Entwässerung, so zum Beispiel im Zuge des Hatschek-Verfahrens, einem Formgebungsprozess unterzogen wird.

8. Verfahren nach Anspruch 7, dadurch gekennzeichnet, dass der Formkörper während des Abbindens und/oder danach einer Wasserdampfbehandlung bei atmosphärischem Druck und/oder einer Wasserdampfhärtung bei höherem Druck und höherer Temperatur unterzogen wird.

**Claims**

1. A shaped article useable as construction element, comprising a hydraulic binder and natural and/or synthetic inorganic and/or organic fibrous materials as well as optionally filler materials, characterized in that the reinforcing fibers comprise bleached and/or unbleached birch cellulose fibers, taken alone or in combination with other fibrous materials.

2. A shaped article according to claim 1, characterized in that the part of reinforcing fibers comprises 1 to 15% by weight of the mixture of fibers, binder and optionally fillers and coloring agents as well as other additives.

3. A shaped article according to claim 1 or 2, characterized in that the hydraulic binder comprises Portland cement and/or high alumine cement and/or high furnace cement and/or pozzuolana cement.

4. A shaped article according to any of claims 1 to 3, characterized in that the hydraulic binder comprises quartz as well as calcium hydroxide and/or cement.

5. A shaped article according to any of claims 1 to 4, characterized in that the mixture comprises as additive mica and/or vermiculite and/or perlite and/or pumice and/or coloring pigments, as well as optionally bentonite, spiolite, amorphous silica, kaolin, wollastonite and ball clay.

6. A shaped article according to any of claims 1 to 5, characterized by the addition of polyelectrolyte, such as polyacrylamides and/or alkylsulfonates and/or alkylcellulose ethers.

7. A process for producing a shaped article according to any of claims 1 to 6, characterized in that or the mixture components in an arbitrary order or the dry mixture first obtained thereof are mixed with water in excess and in that the aquous mixture, under simultaneous dewatering, such as during a Hatschek process, is undergoing a shaping operation.

8. A process according to claim 7, characterized in that the shaped article is undergoing, during the setting and/or thereafter, a water steam treatment at atmospheric pressure and/or a watersteam hardening at higher pressure and higher temperature.

**Revendications**

1. Corps façonné utilisable comme élément de construction comprenant un liant hydraulique et des matières fibreuses naturelles et/ou synthétiques inorganiques et/ou organiques ainsi que, le cas échéant, des matières de charge, caractérisé en ce que les fibres de renforcement comprennent des fibres de pâte du bouleau blanchies et/ou non-blanchies, seules ou en combinaison avec d'autres matières fibreuses.

2. Corps façonné selon la revendication 1, caractérisé en ce que la part en fibres de renforcement comprend 1 à 15 % en poids du mélange composé de fibres, de liant et, le cas échéant, de matières de charge et de colorants ainsi que d'autres additifs.

3. Corps façonné selon la revendication 1 ou 2, caractérisé en ce que le liant hydraulique comprend du ciment Portland et/ou du ciment d'alumine et/ou du ciment de haut fourneau et/ou de la pouzzolane.

4. Corps façonné selon l'une des revendications 1 à 3, caractérisé en ce que le liant hydraulique comprend du quartz ainsi que de l'hydrate de chaux et/ou du ciment.

5. Corps façonné selon l'une des revendications 1 à 4, caractérisé en ce que le mélange comprend comme additif du mica et/ou de la vermiculite et/ou de la perlite et/ou de la ponce et/ou des pigments colorés, ainsi que, le cas échéant, de la bentonite, spiolite, silice amorphe, argile blanche, wollastonite et ball clay.

6. Corps façonné selon l'une des revendications 1 à 5, caractérisé par l'addition de polyélectrolytes, comme des polyacrylamides et/ou des sulfonates d'alkyle et/ou de l'éther cellulosique alkylé.

7. Procédé de fabrication d'un corps façonné selon l'une des revendications 1 à 6, caractérisé en ce que l'on mélange soit les composants du mélange dans un ordre arbitraire soit le mélange sec en résultant en premier lieu avec de l'eau en excès et en ce que le mélange aqueux, tout en étant simultanément asséché, par exemple lors d'un procédé Hatschek, est assujetti à un procédé de mise en forme.

8. Procédé selon la revendication 7, caractérisé en ce que le corps façonné est soumis, lors de la période de prise et/ou ensuite, à un traitement avec de la vapeur d'eau à pression atmosphérique et/ou à une opération de durcissement au moyen de vapeur d'eau à une pression et une température plus élevées.

## Tabelle 1

Bruchmechanische Daten der Faserzementplättchen, hergestellt gemäss Beispiel 1.
Prüfung gemäss DIN, Durchschnittswerte von längs und quer der Maschinenrichtung.

| Platten-Nachbehandlung (Pressung) | Biegefestigkeit N/mm2 | Brucharbeit kJ/m2 | Dichte g/ccm | Wasseraufnahme % |
|---|---|---|---|---|
| ungepresst | 18,4 | 1,605 | 1,353 | 31,2 |
| 180 bar 30 Min. | 33,1 | 2,805 | 1,610 | 21,0 |

## Tabelle 2

Bruchmechanische Daten der Faserzementplättchen, hergestellt gemäss Beispiel 2.
Prüfung gemäss DIN, Durchschnittswerte von längs und quer der Maschinenrichtung.

| Platten-Nachbehandlung (Pressung) | Biegefestigkeit N/mm2 | Brucharbeit kJ/m2 | Dichte g/ccm | Wasseraufnahme % |
|---|---|---|---|---|
| ungepresst | 17,4 | 1,727 | 1,363 | 31,0 |
| 180 bar 30 Min. | 32,0 | 2,605 | 1,524 | 22,1 |

EP 0 287 962 B1

## Tabelle 3

Bruchmechanische Daten der Faserzementplättchen, gepresst bei 180 bar, 30 Min.
aus Plattenbeispiel 3.
Prüfung gemäss DIN, Durchschnittswerte von längs und quer der Maschinenrichtung.

| Plattenherstellung gemäss Patentbeispiel Nr. | Fasermischung (%Gew) | | | Biege-festigkeit N/mm2 | Bruch-arbeit kJ/m2 | Dichte g/ccm | Wasser-aufnahme % |
|---|---|---|---|---|---|---|---|
| | Birken-zellstoff | Flachs-zellstoff | Sisal-Zellstoff | | | | |
| 1 | 20 | 70 | -- | 26,3 | 1,955 | 1,495 | 23,8 |
| 1 | 40 | 50 | -- | 28,8 | 2,483 | 1,500 | 23,3 |
| 1 | 60 | 30 | -- | 31,0 | 2,602 | 1,502 | 23,6 |
| 1 | 80 | 10 | -- | 32,8 | 2,945 | 1,504 | 23,4 |
| 2 | 20 | -- | 70 | 33,1 | 3,568 | 1,531 | 22,9 |
| 2 | 40 | -- | 50 | 33,0 | 3,251 | 1,540 | 22,7 |
| 2 | 60 | -- | 30 | 32,9 | 3,375 | 1,539 | 22,8 |
| 2 | 80 | -- | 10 | 33,4 | 3,105 | 1,537 | 22,8 |

EP 0 287 962 B1

## Tabelle 4

Bruchmechanische Daten der Faserzementplättchen, gepresst bei 180 bar, 30 Min.

aus Patentbeispiel 4.

Faserkonzentration = konstant = 8 % Birkensulfatzellstoff, ungebleicht

| Herstellung der Platten gemäss Patentbeispiel Nr. | Matrix % Gew. | | | | | Biege-festigkeit N/mm2 | Bruch-arbeit kJ/m2 | Dichte g/ccm | Wasser-aufnahme % |
|---|---|---|---|---|---|---|---|---|---|
| | Portland-zement | Quarzsand 5000 Blaine | Perlit | Glimmer | Vermiculit | | | | |
| 1 | 800 | -- | 200 | -- | -- | 29,5 | 2,453 | 1,427 | 27,5 |
| 1 | 700 | -- | 300 | -- | -- | 27,5 | 2,115 | 1,348 | 29,0 |
| 1 | 800 | -- | -- | 200 | -- | 28,4 | 2,382 | 1,542 | 25,7 |
| 1 | 800 | -- | -- | -- | 200 | 26,9 | 2,004 | 1,492 | 26,9 |
| 2 | 600 | 400 | -- | -- | -- | 32,4 | 2,614 | 1,551 | 22,0 |
| 2 | 540 | 360 | 100 | -- | -- | 28,4 | 2,210 | 1,380 | 26,8 |
| 2 | 540 | 360 | -- | 100 | -- | 30,0 | 1,050 | 1,405 | 26,0 |

EP 0 287 962 B1

**Tabelle 5**

Bruchmechanische Daten von autoklavierten Quarzsand-Kalkhydrat-Faserplatten gemäss
Beispiel 5, gepresst bei 180 bar, 30 Min.
Faserkonzentration = konstant = 8 % Birkensulfatzellstoff, ungebleicht

| Matrix = 92 % | | Biegefestigkeit | Brucharbeit | Dichte | Wasser-aufnahme |
| Quarzmehl 5500 Blaine Gewichtsteile | Kalkhydrat Gewichtsteile | N/mm2 | kJ/m2 | g/ccm | % |
|---|---|---|---|---|---|
| 550 | 300 | 28,5 | 2,705 | 1,483 | 24,1 |
| 550 | 375 | 26,9 | 2,245 | 1,427 | 27,1 |
| 550 | 450 | 25,7 | 2,010 | 1,376 | 28,5 |

EP 0 287 962 B1

Tabelle 6

Bruchmechanische Daten von Faserzementplättchen hergestellt gemäss Beispiel 2, gepresst bei 180 bar, 30 Min., DIN geprüft, Durchschnittswerte von längs und quer der Maschinenrichtung.

| Zellulosefaser Typ | Fasermischungen % Gew. | | | | | | | | | | |
|---|---|---|---|---|---|---|---|---|---|---|---|
| Birke | 5 | 8 | -- | -- | -- | -- | -- | 6 | 4 | 6 | 4 |
| Eucalyptus | -- | -- | 5 | 8 | -- | -- | -- | -- | -- | -- | -- |
| Pinus Radiata | -- | -- | -- | -- | 8 | -- | -- | -- | -- | -- | -- |
| Sisal | -- | -- | -- | -- | -- | 8 | -- | 2 | 4 | -- | -- |
| Abaca | -- | -- | -- | -- | -- | -- | 8 | -- | -- | 2 | 4 |
| **Bruchmechanische Daten** | | | | | | | | | | | |
| Biegefestigkeit N/mm2 | 27,9 | 34,2 | 20,8 | 28,8 | 26,4 | 29,4 | 33,1 | 30,8 | 32,5 | 34,0 | 34,7 |
| Brucharbeit kJ/m2 | 1,004 | 2,884 | 0,727 | 1,474 | 1,775 | 3,680 | 4,101 | 3,405 | 3,246 | 3,002 | 3,163 |
| Dichte g/ccm | 1,705 | 1,541 | 1,710 | 1,556 | 1,549 | 1,552 | 1,540 | 1,557 | 1,555 | 1,545 | 1,543 |
| Wasseraufnahme % | 20,3 | 22,8 | 20,1 | 22,0 | 22,2 | 22,7 | 23,0 | 22,4 | 21,9 | 22,9 | 22,8 |

EP 0 287 962 B1

## Tabelle 6a (Materialkenndaten)

8 Gew.% Zelstoff / 55 Gew.% Zement / 37 Gew.% Quarz

|  | Fichten- | Eucalyptus- | Birkenzellstoff |
|---|---|---|---|
| Biegezugfestig-keit (N/ mm2) | 14,2 | 21;3 | 24,7 |
| Bruchenergie (kJ/ m 2) | 0,99 | 0,94 | 1,69 |
| Rohdichte (g/ cm 3) | 1,53 | 1,427 | 1,422 |
| Wasseraufnahme ( % ) | 32,3 | 33,1 | 27,1 |
| Plattendicke ( mm ) | 6,1 | 6,2 | 6,1 |

Mittelwerte aus jeweils 100 Plattenformkörpern (ungepresst); Direktauflaufmaschine entsprechend Beispiel 2; ungebleichter Birkenzellstoff gegen gebleichten Euca- und Fichtenzellstoff.

EP 0 287 962 B1

## Tabelle 7 (Mischungsvariante für Wellplatten)

| | Mischung Nr. | | | |
| --- | --- | --- | --- | --- |
| | 1 | 2 | 3 | 4 |
| Birken-Zellstoff | 8 | 6 | 6 | - |
| Pinus Radiata 65° SR | - | 2 | - | - |
| Abaca 65° SR | - | - | 2 | - |
| Eucalyptus | - | - | - | 8 |
| Ball Clay | 10 | 10 | 10 | 10 |
| Quarz | 27 | 27 | 27 | 27 |
| Zement | 55 | 55 | 55 | 55 |

EP 0 287 962 B1

Tabelle 8
_____

Bruchmechanische Eigenschaften der Wellplatten, hergestellt gemäss Beispiel 7 mit den Mischungen aus Tabelle 7, Prüfung gemäss DIN.

| Mischung Nr. | Biegefestigkeit N/mm2 | Energie bei Bruch Nm | Dichte g/ccm | Wasser- aufnahme % |
|---|---|---|---|---|
| ungepresst | | | | |
| 1 | 19,8 | 67,3 | 1,527 | 24,0 |
| 2 | 18,2 | 78,8 | 1,519 | 24,2 |
| 3 | 21,9 | 92,4 | 1,517 | 24,1 |
| 4 | 16,8 | 52,1 | 1,529 | 23,9 |
| gepresst | | | | |
| 1 | 27,2 | 105,4 | 1,820 | 15,3 |

EP 0 287 962 B1